# EUROPEAN PATENT SPECIFICATION

(11) **EP 2 309 686 B1**
(45) Date of publication and mention of the grant of the patent: **18.06.2014**
(21) Application number: 09802364.1
(22) Date of filing: 11.05.2009
(51) Int. Cl.: H04L 12/70, H04L 29/06, H04L 29/12

(54) **DATA PACKET PROCESSING METHOD AND APPARATUS THEREOF**
VERFAHREN UND VORRICHTUNG ZUR VERARBEITUNG VON DATENPAKETEN
PROCÉDÉ DE TRAITEMENT DE PAQUETS DE DONNÉES ET APPAREIL ASSOCIÉ

(30) Priority: 28.07.2008 CN 200810142580
(43) Date of publication of application: 13.04.2011
(73) Proprietor: Chengdu Huawei Symantec Technologies Co., Ltd., Sichuan 611731 (CN)
(72) Inventor: LIU, Lifeng, Guangdong 518129 (CN); ZHANG, Dong, Guangdong 518129 (CN)
(74) Representative: Kreuz, Georg Maria
(86) International application number: PCT/CN2009/071733
(87) International publication number: WO 2010/012171

(56) References cited:
- WO-A2-2008/073349
- CN-A- 1 980 231
- US-A1- 2003 145 198
- US-A1- 2004 010 683
- US-A1- 2006 077 908
- ARKKO J ET AL: "SEcure Neighbor Discovery (SEND); rfc3971.txt", 20050301, 1 March 2005 (2005-03-01), XP015009743, ISSN: 0000-0003

## Description

### Field of the Invention

The present invention relates to security technologies of computer networks, and in particular, to a method and apparatus for processing packets.

### Background of the Invention

The Cryptographically Generated Addresses (CGA) protocol is defined in RFC 3972. A CGA is an Internet Protocol version 6 (IPv6) address. The address consists of 128 bits, where the first 64 bits are a subnet prefix and the last 64 bits are an interface identifier. The interface identifier of the CGA is generated by computing a one-way hash function according to a public key and some additional parameters. Re-computing the hash value and comparing the value with the interface identifier can verify the association between the address and the public key. Messages sent from the address are signed with a private key corresponding to the public key and the signature is verified by the receiver so that the source address is verified.

The Secure Neighbor Discovery protocol, wherein CGAs are used, is defined in RFC 3971.

The prior art has at least the following disadvantages: Although the CGA has the source address verification function, the CGA is mostly applied in one or several application protocols. The CGA is not universally applicable.

### Summary of the Invention

Embodiments of the present invention provide a method and apparatus for processing packets, which can extend the usage of the CGA protocol.

A method for processing packets includes:
receiving an IPv6 packet carrying a CGA extension header from a sender, wherein the CGA extension header is added to an IPv6 header of the IPv6 packet;
at the network layer, obtaining the CGA extension header from the IPv6 packet, where the CGA extension header includes CGA parameters (CGA Params) and CGA signature (CGA Sig);
verifying a source address of the IPv6 packet according to the CGA Params and CGA Sig; and
transmitting the payload of the IPv6 packet to an upper layer after the verification succeeds.

An apparatus for processing packets includes:
a receiving unit, configured to receive an lPv6 packet carrying CGA extension header from a sender, the CGA extension header is added to an IPv6 header of the IPv6 packet;
an obtaining unit, configured to obtain the CGA extension header from the IPv6 packet at the network layer, where the CGA extension header includes CGA parameters (CGA Params) and CGA signature (CGA Sig);
a verifying unit, configured to verify a source address of the IPv6 packet according to the CGA Params and CGA Sig; and
a transmitting unit, configured to transmit the payload of the IPv6 packet to an upper layer after the verification succeeds.

In embodiments of the present invention, by adding the CGA Params and CGA Sig of the sender to the IP packet, the receiver can verify the source address of the IP packet at the network layer through the received information. In this way, security of the originally unreliable network layer is guaranteed. In addition, because the security mechanism is implemented at the network layer, the CGA may be applied more widely.

### Brief Description of the Drawings

To illustrate the technical solution according to the embodiments of the present invention or in the prior art more clearly, the accompanying drawings for describing the embodiments or the prior art are given briefly below. Apparently, the accompanying drawings in the following description are only some embodiments of the present invention, and persons of ordinary skill in the art can derive other drawings from the accompanying drawings without creative efforts.
FIG. 1 shows a flowchart of a method for processing packets according to an embodiment of the present invention;
FIG. 2 shows a format of a CGA extension header according to an embodiment of the present invention;
FIG. 3 shows a format of a CGA Request option according to an embodiment of the present invention;
FIG. 4 shows a format of a CGA Params option according to an embodiment of the present invention;
FIG. 5 shows a format of a CGA Sig option according to an embodiment of the present invention;
FIG. 6 shows a flowchart of a method for processing packets according to another embodiment of the present invention;

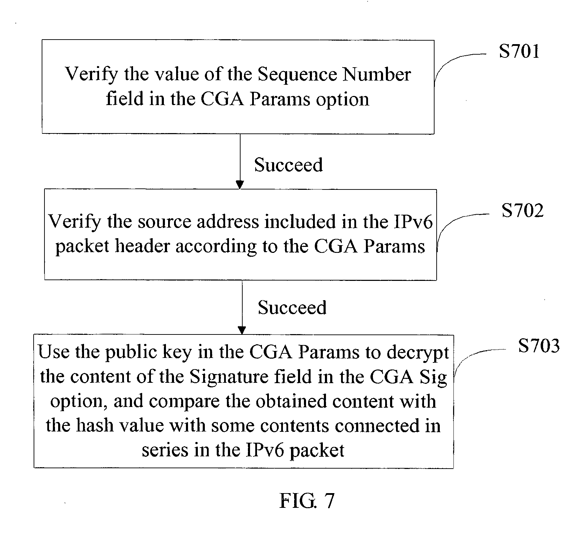

FIG. 7 shows a flowchart of a verification procedure according to an embodiment of the present invention;
FIG. 8 shows an application scenario according to an embodiment of the present invention;
FIG. 9 shows a structure of an apparatus for processing packets according to an embodiment of the present invention;
FIG. 10 shows a structure of a requesting unit according to an embodiment of the present invention;
FIG. 11 shows another structure of a requesting unit according to an embodiment of the present invention; and
FIG. 12 shows a structure of a verifying unit according to an embodiment of the present invention.

### Detailed Description of the Embodiments

The following detailed description is directed to the technical solution of the present invention with reference to the accompanying drawings. However, the embodiments to be described are only part of, rather than all of, the embodiments of the present invention. Additionally, all other embodiments, which can be derived by those skilled in the art from the embodiments given herein without any creative efforts, fall within the scope of the present invention.

In embodiments of the present invention, a CGA extension header is added to an IP packet such as the IPv6 extension header. The CGA extension header may include a CGA Request, CGA parameters (CGA Params), and a CGA signature (CGA Sig). The CGA extension header is used to carry the CGA related information. The packet receiver verifies the sender address according to the CGA related information. The following takes an IPv6 packet as an example. Obviously, other types of IP packets may also be applied in the present invention if the packets have fields for extending protocol headers or are compatible with IPv6. For example, the IP packet of a version later than IPv6 or the IP packet compatible with IPv6 may be used in embodiments of the present invention if the IP packet has extension headers.

In IPv6, the optional network layer information is encoded in an independent header and placed between the IPv6 header and the upper-layer protocol header in the packet. An IPv6 header may carry zero, one, or multiple extension headers. Each extension header is identified by the Next Header field in the previous header. A CGA extension header may be added to the IPv6 extension header. For example, after a CGA extension header is added, the IPv6 extension header is arranged in the following sequence:

### IPv6 header

- 0: Hop-by-Hop Options header
- 60: Destination Options header
- 43: Routing header
- 44: Fragment header
- 149: CGA header
- 51: Authentication header
- 50: Encapsulating Security Payload header
- 60: Destination Options header

The number in front of each header is the protocol number and is assigned by the Internet Assigned Numbers Authority (IANA). The added CGA extension header may use a protocol number that is not assigned, for example, 149 in this example, or other protocol numbers that are not assigned.

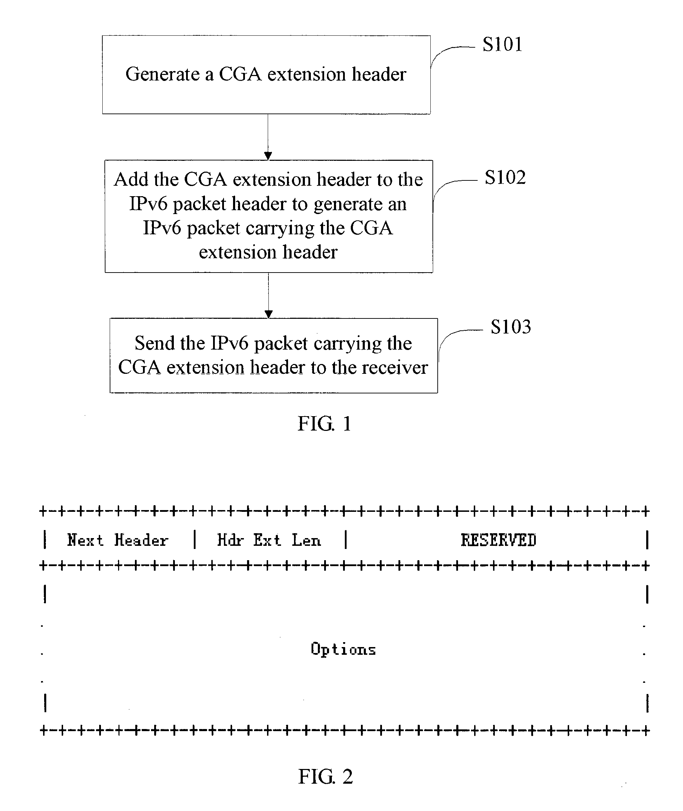

As shown in FIG. 1, in an embodiment of the present invention, when a sender sends an IPv6 packet carrying a CGA extension header, the method for processing the packet includes the following steps:
S101. Generate a CGA extension header.

The CGA extension header may include a public key and a digital signature of the sender. The sender generates an IPv6 source address by computing the one-way hash function according to the public key and some related parameters, attaches a digital signature by using the private key of the sender, and pads the related parameters and digital signature in the corresponding positions of the CGA extension header.

S102. Add the CGA extension header to the IPv6 packet to generate an IPv6 packet carrying the CGA extension header.

The CGA extension header is located between the IPv6 header and the upper-layer protocol header in the IPv6 packet.

S103. Send the IPv6 packet carrying the CGA extension header to the receiver, where the IPv6 packet is used for the receiver to verify the source address of the IPv6 packet sender.

The format of a CGA extension header in an embodiment of the present invention is shown in FIG. 2. The CGA extension header includes the following fields: Next Header, Hdr Ext Len, Reserved, and Options.

The Next Header field is an 8-bit selector and identifies the type of the next header in the CGA extension header.

The Hdr Ext Len field is an 8-bit unsigned integer. This field identifies the length of the CGA extension header measured in 8 bytes. The first 8 bytes are excluded during length calculation. The length of this field is 0, indicating a special meaning, namely, initializing the CGA. When one communication party wants to use the CGA to protect the communication, a CGA extension header with the length 0 may be sent; when the communication party receives the extension header with the length 0, the party sends a CGA Request to the peer.

The 16-bit Reserved field is used for future extension. This field is set to 0.

The Options field with a variable length includes one or multiple data types.

Three types of data may be selected for the Options field: CGA Request, CGA Params, and CGA Sig. The CGA Request option is used to request the peer to provide CGA parameters; the CGA Params option is used to transmit CGA parameters; and the CGA Sig option indicates the signature attached to the payload of a packet by using the private key of a CGA node. If the CGA extension header includes a CGA Params option, the CGA extension header also includes a CGA Sig option; otherwise, the receiver sends an Internet Control Message Protocol (ICMP) error message to the source address of the sender, notifying the unidentifiable option type. When no CGA Request is received, the sender may also add a CGA extension header to the packet; the processing mode (authenticate or ignore) of the CGA extension header is decided by the receiver.

At the network layer, the sender host receives the packet from the upper layer. The CGA extension header may be encapsulated during the encapsulation of the IPv6 header. If the header of the packet sent by the host includes a CGA Request option, the source address of the receiver needs to be verified. The packet returned by the receiver needs to carry the CGA Params and CGA Sig options, providing data contents required by the sender host for verification. The value of the Sequence Number field in the CGA Params option is the value of the Sequence Number field in the CGA Request option plus 1. The sender host may also actively add a CGA extension header to the sent packet, including the CGA Params and CGA Sig options to provide related data contents for the receiver to verify the sender address, where the Sequence Number field in the CGA Params option is set to 0.

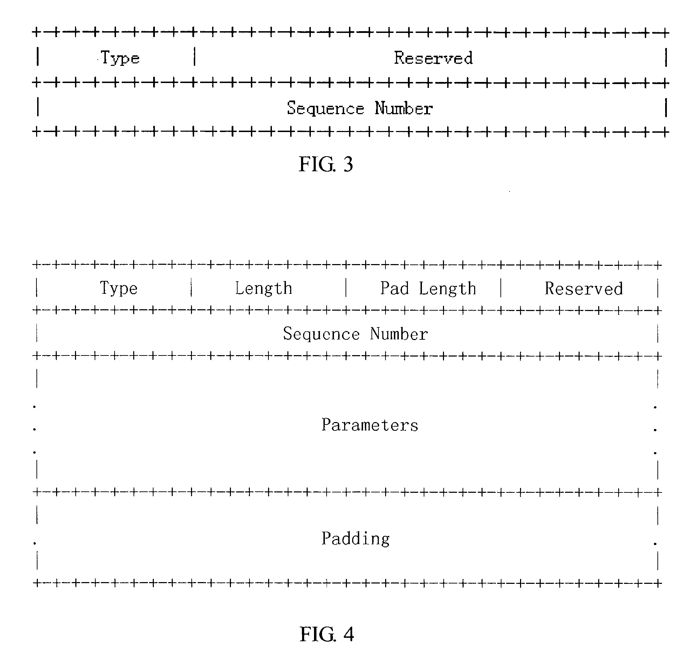

The format of a CGA Request option in an embodiment of the present invention is shown in FIG. 3. The CGA Request option includes the following fields: Type, Reserved, and Sequence Number.

The Type field is an 8-bit unsigned integer. In this embodiment, when the Type field is set to 193, it indicates that the packet carries a CGA Request option. In other embodiments, other values may also be used to indicate that the packet carries a CGA Request option.

The 24-bit Reserved field is used for future extension. This field is set to 0.

The Sequence Number field is a 32-bit random number, including information for preventing replay attacks.

The host may actively initiate a CGA Request to the receiver according to the upper-layer protocol, requesting the receiver to send the CGA Params and CGA Sig information for verifying the source address of the receiver.

The format of a CGA Params option in an embodiment of the present invention is shown in FIG. 4. The CGA Params option includes the following fields: Type, Length, Pad Length, Reserved, Sequence Number, Parameters, and Padding.

The Type field is an 8-bit unsigned integer. In this embodiment, when the Type field is set to 194, it indicates the packet carries a CGA Params option. In other embodiments, other values may also be used to indicate that the packet carries a CGA Params option.

The Length field is an 8-bit unsigned integer measured in 8 bytes, indicating the length of the entire CGA Params, namely, the sum of lengths of the fields such as Type, Length, Pad Length, Reserved, Sequence Number, Parameters, and Padding.

The Pad Length field is an 8-bit unsigned integer measured in bytes, indicating the length of the Padding field.

The 8-bit Reserved field is used for future extension. This field must be set to 0.

The Sequence Number field is a 32-bit integer, including information for preventing replay attacks. If the CGA Params option is used for responding to the CGA Request, the value of the Sequence Number field is the value of the Sequence Number field in the CGA Request option plus 1; otherwise, this field is set to 0.

The Parameters field with a variable length includes the CGA Params information.

The Padding field with a variable length is used to make the packet length a multiple of 8 bytes. The content of the Padding field is 0.

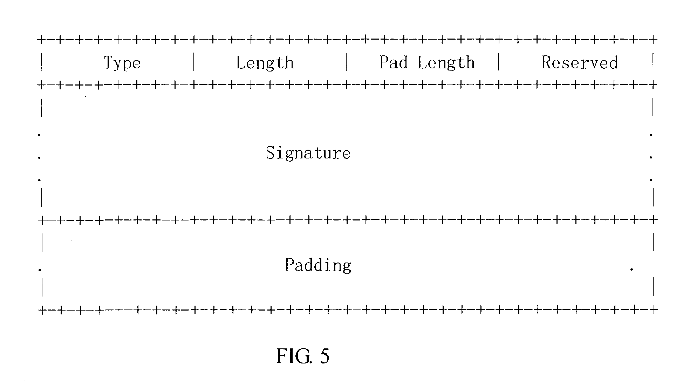

The format of a CGA Sig option in an embodiment of the present invention is shown in FIG. 5. The CGA Sig option includes the following fields: Type, Length, Pad Length, Reserved, Signature, and Padding.

The Type field is an 8-bit unsigned integer. In this embodiment, when the Type field is set to 195, it indicates the packet carries a CGA Sig option. In other embodiments, other values may also be used to indicate that the packet carries a CGA Sig option.

The Length field is an 8-bit unsigned integer measured in 8 bytes, indicating the length of the entire CGA Sig, namely, the sum of lengths of the fields such as Type, Length, Pad Length, Reserved, Signature, and Padding.

The Pad Length field is an 8-bit unsigned integer measured in bytes, indicating the length of the Padding field.

The 8-bit Reserved field is used for future extension. This field is set to 0.

The Signature field with a variable length includes the signature attached to the packet content by using the private key of the sender.

The Padding field with a variable length is used to make the packet length a multiple of 8 bytes. The content of the Padding field is 0.

After receiving the CGA Request from the sender, the receiver returns a packet carrying the CGA Params and CGA Sig options to the sender, providing data contents required by the sender host for verification. In this way, the value of the Sequence Number field in the CGA Params option is the value of the Sequence Number field in the CGA Request option plus 1. The sender may also actively add a CGA extension header to the sent packet, including the CGA Params and CGA Sig options to provide related data contents for the receiver to verify the sender address, where the Sequence Number field in the CGA Params option is set to 0.

The CGA Params field carried in the CGA Params option corresponds to the source address in the IPv6 packet header. The sender generates an IPv6 source address by computing a one-way hash function according to the public key and some additional parameters, and generates other parameters according to the CGA protocol requirement.

The private key used for the signature in the CGA Sig option corresponds to the public key carried in the CGA Params option of the same extension header.

The step in which the sender generates a CGA Sig option is as follows:
The host obtains the following contents and connects the contents in sequence:
   128-bit source address obtained from the header information of the IP packet;
   128-bit destination address obtained from the header information of the IP packet;
   CGA extension header except the CGA Sig option; and
   payload of the IP packet (at the transport layer and higher layers).

The host uses a private key to sign the obtained data and places the signature in the Signature field in the CGA Sig option.

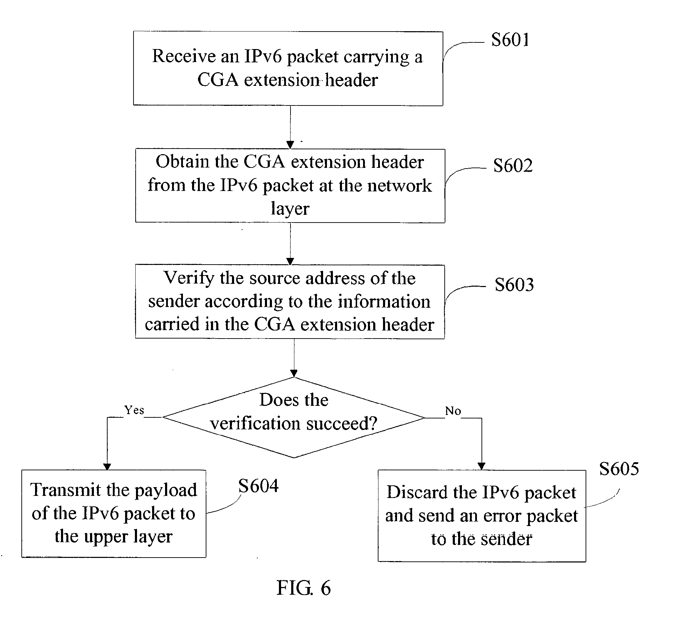

As shown in FIG. 6, in an embodiment of the present invention, when the receiver receives an IPv6 packet carrying a CGA extension header, the processing procedure is as follows:
S601. The receiver receives an IPv6 packet carrying a CGA extension header from the sender.

The network layer of the receiver receives the IPv6 packet transmitted from the lower layer.

S602. At the network layer, the receiver obtains the CGA extension header from the IPv6 packet, where the CGA extension header includes the CGA Params and CGA Sig of the sender.

S603. The receiver verifies the source address of the sender according to the information carried in the CGA extension header.

The receiver verifies the IPv6 packet according to the information in the CGA Params option and the information in the CGA Sig option carried in the CGA extension header.

S604. If the verification succeeds, the receiver transmits the payload of the IPv6 packet to the upper layer, which processes the packet.

S605. If the verification fails, the receiver discards the IPv6 packet and sends an ICMP error packet to the sender.

Before step S603, the procedure may further include: The network layer confirms whether verification of the source address of the IPv6 packet is required; the network layer may determine whether to perform verification according to related configuration information. The configuration information usually comes from the upper-layer protocol. The upper-layer protocol may generate the configuration information according to the user input, default configuration of the host, or security requirements of the upper-layer protocol, and notify the configuration information to the network layer. If the receiver confirms according to the related configuration information whether a verification is required, an embodiment of the verification procedure is as follows:
S701. The receiver verifies the value of the Sequence Number field in the CGA Params option.

If the received IPv6 packet is a response to the CGA Request, the receiver first deducts 1 from the sequence number in the CGA Params option and compares the result with the sequence number in the CGA Request cached by the receiver. If the contents are consistent, the receiver performs step S702; otherwise, the receiver discards the IPv6 packet and sends an ICMP error packet.

S702. According to the parameter information in the CGA Params option, the receiver verifies the source address included in the IPv6 packet header. If the verification succeeds, the receiver performs step S703; otherwise, the receiver discards the IPv6 packet and sends an ICMP error packet.

S703. The receiver uses the public key in the CGA Params to decrypt the content of the Signature field in the CGA Sig option, and compares the obtained content with the hash value with some contents connected in series in the IPv6 packet. If the contents are consistent, the verification succeeds; otherwise, the receiver discards the IPv6 packet and sends an ICMP error packet.

Before step S601, the procedure may further include:
The receiver generates and sends an IPv6 packet carrying a CGA extension header to the sender, where the CGA extension header includes a CGA Request option, requesting the sender to send the CGA related information.

The sender returns an IPv6 packet carrying the CGA extension header, which includes the CGA Params and CGA Sig options. The value of the Sequence Number field in the CGA Params option is the value of the Sequence Number field in the CGA Request option plus 1.

The step in which the receiver generates and sends an IPv6 packet carrying a CGA extension header includes:
The receiver generates a CGA extension header, which includes the CGA Request option.

The receiver adds the CGA extension header to the IPv6 packet to generate an IPv6 packet carrying the CGA extension header.

The receiver sends the IPv6 packet carrying the CGA extension header to the sender.

In the method for processing packets in another embodiment of the present invention, the sender uses the existing Destination Options header to carry the CGA related information for replacing the newly created CGA extension header, thus implementing the related functions of the CGA.

When the value of the Next Header field in the header is 60, it indicates the next header is a Destination Options header. The existing Destination Options header includes the following fields: Next Header, Hdr Ext Len, and Options.

The Next Header is an 8-bit selector and identifies the type of the next header in the Destination Options header.

The Hdr Ext Len field is an 8-bit unsigned integer. This field identifies the length of the Destination Options header measured in 8 bytes. The first 8 bytes are excluded during length calculation.

The Options field with a variable length includes one or multiple data types.

In embodiments of the present invention, the Destination Options header carries the CGA related information, which corresponds to the three data types of the Options field in the preceding CGA extension header: namely, CGA Request, CGA Params, and CGA Sig. In embodiments of the present invention, the three data types may be directly added to the Options field in the Destination Options header. In this way, a new CGA extension header is not required.

It should be noted that in the existing IPv6 extension header, the Destination Options header may be present once or at most twice. Embodiments of the present invention are not restricted by the times of presence of the Destination Options header. Any Destination Options header may carry the CGA related information, or any two Destination Options headers may carry the CGA related information.

In this embodiment, the method for the sender and the receiver to process the CGA related information is basically the same as that in the previous embodiment. The difference is that: In this embodiment, the sender adds the Destination Options header carrying the CGA related information to the packet, and the receiver extracts the CGA related information from the Destination Options header for verification; in the previous embodiment, the sender uses a new CGA extension header, and the receiver extracts the content information from the new CGA extension header for verification.

In the method for processing packets in embodiments of the present invention, by adding the CGA related information such as CGA Params and CGA Sig to the IPv6 packet, the receiver may use the received information to verify the source address of the IPv6 packet at the network layer, providing a method for the network layer to verify the source address and giving full play to the CGA protocol in source address verification; in this way, security of the originally unreliable network layer is guaranteed. In addition, because security verification is performed at the network layer, the security mechanism is not limited to one or several upper-layer application protocols, and is universally applicable.

Obviously, the packet in the present invention is not limited to the IPv6 packet. For example, the IP packet of a version later than IPv6 or the IP packet compatible with IPv6 may be used in embodiments of the present invention if the IP packet has extension headers. The procedure is similar to the procedure in the preceding embodiments.

Persons of ordinary skill in the art should understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be a magnetic disk, a compact disk read-only memory (CD-ROM), a read-only memory (ROM) or a random access memory (RAM).

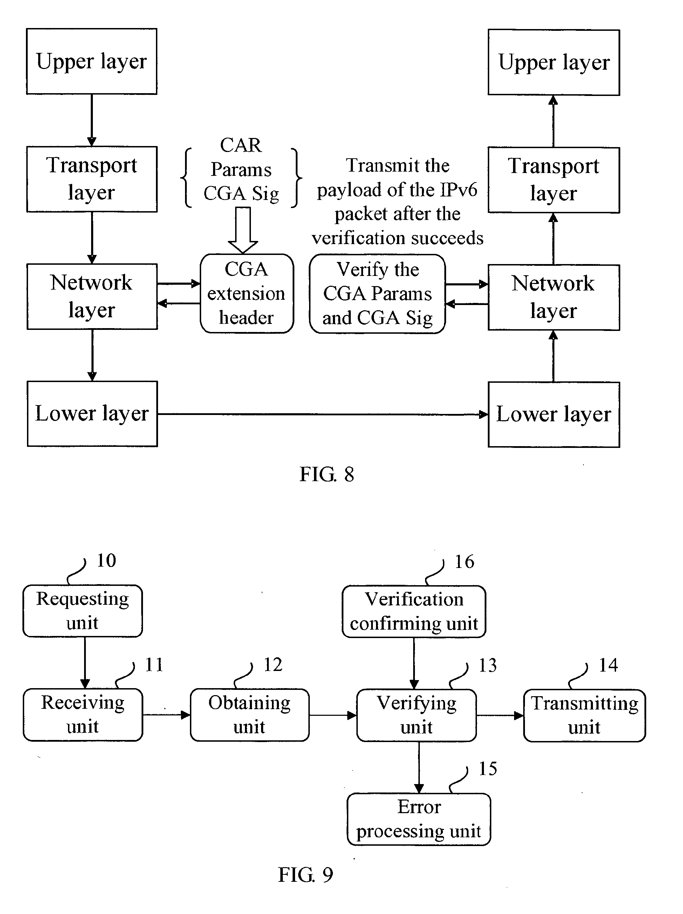

FIG. 8 shows an application scenario of an embodiment of the present invention. For two hosts in communications, the sender adds the CGA Params and CGA Sig to the CGA extension header at the network layer and encapsulates the CGA extension header to the IPv6 packet, and then sends the IPv6 packet out; the receiver extracts the CGA Params and CGA Sig of the sender at the network layer and performs verification; if the verification succeeds, the receiver transmits the payload of the IPv6 packet to the transport layer.

It is understandable that the sender may also directly add the CGA Params and CGA Sig to the existing Destination Options header at the network layer and encapsulate the Destination Options header to the IPv6 packet, and then send the IPv6 packet out; the receiver extracts the CGA Params and CGA Sig of the sender at the network layer and performs verification; if the verification succeeds, the receiver transmits the payload of the IPv6 packet to the transport layer.

As shown in FIG. 9, an apparatus for processing packets in an embodiment of the present invention includes:
a receiving unit 11, configured to receive an IPv6 packet carrying CGA related information from a sender;
an obtaining unit 12, configured to obtain the CGA related information from the IPv6 packet at the network layer, where the CGA related information includes CGA Params and CGA Sig;
a verifying unit 13, configured to verify the source address of the IPv6 packet according to the CGA Params and CGA Sig; and
a transmitting unit 14, configured to transmit the payload of the IP packet to an upper layer after the verification succeeds.

The apparatus for processing packets in an embodiment of the present invention may further include:
an error processing unit 15, configured to discard the IPv6 packet when the verification fails and send an error packet to the sender.

The apparatus for processing packets in an embodiment of the present invention may further include:
a requesting unit 10, configured to send an IPv6 packet carrying a CGA Request, requesting the sender to send the CGA related information that is to be received by the receiving unit 11.

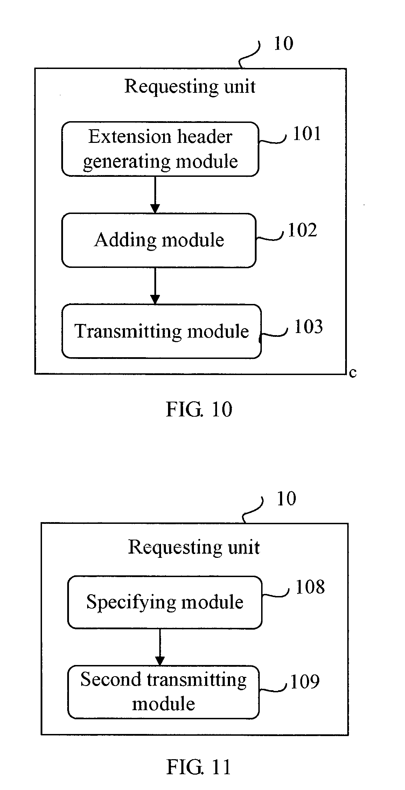

As shown in FIG. 10, the requesting unit 10 in an embodiment of the present invention may include:
an extension header generating module 101, configured to generate a CGA extension header, where the CGA extension header includes a CGA Request option;
an adding module 102, configured to add the CGA extension header to the IPv6 packet to generate an IPv6 packet carrying the CGA extension header; and
a sending module 103, configured to send the IPv6 packet carrying the CGA extension header to the sender, requesting the sender to add the CGA related information to the CGA extension header.

As shown in FIG. 11, the requesting unit 10 in another embodiment of the present invention may include:
a specifying module 108, configured to specify the Destination Options header in the IP packet, where the specified Destination Options header includes a CGA Request option; and
a second sending module 109, configured to send the IP packet carrying the Destination Options header to the sender, requesting the sender to add the CGA related information to the Destination Options header.

As shown in FIG. 9, the apparatus for processing packets in an embodiment of the present invention may further include:
a verification confirming unit 16, configured to confirm according to the related configuration information whether verification of the source address of the IPv6 packet is required.

The configuration information usually comes from the upper-layer protocol. The upper-layer protocol may generate the configuration information according to the user input, default configuration of the host, or security requirements of the upper-layer protocol, and notify the configuration information to the network layer.

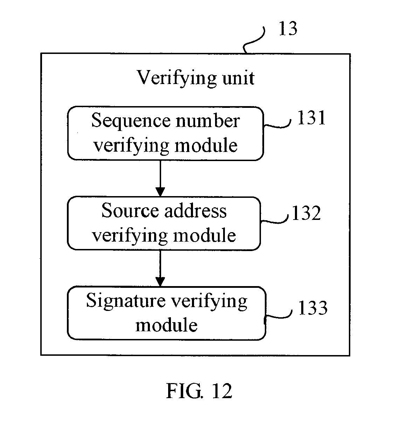

As shown in FIG. 12, the verifying unit 13 in an embodiment of the present invention includes:
a sequence number verifying module 131, configured to: verify the value of the Sequence Number field in the CGA Params option, and transmit the IPv6 packet to a source address verifying module 132 after the verification succeeds, or output a verification result of failure after the verification fails;
the source address verifying module 132, configured to: verify the source address included in the IPv6 packet header according to the parameters in the CGA Params option, and transmit the IPv6 packet to a signature verifying module 133 after the verification succeeds, or output a verification result of failure after the verification fails; and
the signature verifying module 133, configured to: use the public key in the CGA Params option to decrypt the content of the Signature field in the CGA Sig option, compare the obtained content with the hash value with some contents connected in series in the IPv6 packet, and if the contents are consistent, output a verification result indicating the verification succeeds, or else, output a verification result indicating the verification fails.

In embodiments of the present invention, by adding the CGA related information such as CGA Params and CGA Sig to the IPv6 packet, the receiver may use the received information to verify the source address of the IPv6 packet at the network layer, providing a method for the network layer to verify the source address and giving full play to the CGA protocol in source address verification; in this way, security of the originally unreliable network layer is guaranteed. In addition, because security verification is performed at the network layer, the security mechanism is not limited to one or several upper-layer application protocols and is universally applicable.

Obviously, the packet processed by the apparatus of the present invention is not limited to the IPv6 packet. For example, the IP packet of a version later than IPv6 or the IP packet compatible with IPv6 may be used in embodiments of the present invention if the IP packet has extension headers. The implementation is similar to that of the apparatus in the preceding embodiments.

Those skilled in the art may be aware that in combination with the units and algorithm steps disclosed in embodiments of the present invention, the present invention may be implemented by electronic hardware or/and computer software. To clarify the interchangeability between hardware and software, the composition and steps of each embodiment have been described according to the functions. Whether these functions are executed through hardware or software depends on the specific applications and design constraints of the technical solution. Those skilled in the art may use different methods to implement the described functions according to each specific application, but the implementation shall fall within the scope of the present invention.

In combination with the method and algorithm steps disclosed in embodiments of the present invention, the present invention may be implemented by hardware or/and a software module executed by a processor. The software module may be stored in a random-access memory (RAM), a memory, a read-only memory (ROM), an electrically-programmable read-only memory (EPROM), an electrically-erasable programmable read-only memory (EEPROM), a register, a hard disk, a removable disk, a CD-ROM, or a storage medium of any form.

Detailed above are only exemplary embodiments of the present invention. It is apparent that those skilled in the art can make various modifications and variations to the present invention without departing from the scope of the present invention.

## Claims

1. A method for processing packets, **characterized by**
receiving (S601) an Internet Protocol version 6, IPv6, packet carrying a Cryptographically Generated Addresses, CGA, extension header from a sender, wherein the CGA extension header is added to an IPv6 header of the IPv6 packet;
at a network layer, obtaining the CGA extension header from the IPv6 packet (S602), wherein the CGA extension header comprises CGA parameters, CGA Params, and CGA signature, CGA Sig;
verifying a source address of the IPv6 packet (S603) according to the CGA Params and CGA Sig; and
transmitting a payload of the IPv6 packet to an upper layer (S604) after the verification succeeds.

2. The method of claim 1, further comprising:
discarding the IPv6 packet (S605) when the verification fails and sending an error packet to the sender.

3. The method of claim 1 or 2, wherein the step of verifying the source address of the IPv6 packet according to the CGA Params and CGA Sig comprises:
verifying the value of a Sequence Number field in the CGA Params;
verifying the source address comprised in an IPv6 packet header according to parameters in the CGA Params if the verification succeeds; and
using a public key in the CGA Params to decrypt a content of a Signature field in CGA Sig after the verification succeeds, comparing the obtained content with a hash value with some contents connected in series in the IPv6 packet, and if the contents are consistent, outputting a verification result indicating the verification succeeds.

4. The method of claim 1 or 2, wherein before the step of receiving the IPv6 packet carrying the CGA extension header from the sender, further comprising:
sending an IPv6 packet carrying a CGA Request to the sender for requesting the sender to send CGA related information.

5. The method of claim 4, wherein the step of sending the IPv6 packet carrying the CGA Request to the sender for requesting the sender to send the CGA related information comprises:
generating a CGA extension header, which comprises a CGA Request;
adding the CGA extension header to extension header of the IPv6 packet to generate an IPv6 packet carrying the CGA extension header; and
sending the IPv6 packet carrying the CGA extension header to the sender for requesting the sender to add the CGA related information to the CGA extension header.

6. The method of claim 4, wherein the step of sending the IPv6 packet carrying the CGA Request to the sender for requesting the sender to send the CGA related information comprises:
specifying a Destination Options header in extension header of the IPv6 packet, wherein the specified Destination Options header comprises a CGA Request; and
sending the IPv6 packet carrying the Destination Options header to the sender for requesting the sender to add the CGA related information to the Destination Options header.

7. The method of claim 1, wherein, before the step of verifying the source address of the IPv6 packet according to the CGA Params and CGA Sig, the method comprises:
confirming, by the network layer, whether verification on the source address of the IPv6 packet is required according to related configuration information.

8. An apparatus for processing packets, **characterized by**
a receiving unit (11), configured to receive an Internet Protocol version 6, IPv6, packet carrying Cryptographically Generated Addresses, CGA, extension header from a sender, the CGA extension header is added to an IPv6 header of the IPv6 packet;
an obtaining unit (12), configured to obtain the CGA extension header from the IPv6 packet at a network layer, wherein the CGA extension header comprises CGA parameters, CGA Params, and CGA signature CGA Sig of the sender;
a verifying unit (13), configured to verify a source address of the IPv6 packet according to the CGA Params and CGA Sig; and
a transmitting unit (14), configured to transmit a payload of the IPv6 packet to an V upper layer after the verification succeeds.

9. The apparatus of claim 8, further comprising:
an error processing unit (15), configured to discard the IPv6 packet when the verification fails and send an error packet to the sender.

10. The apparatus of claim 8 or 9, wherein the verifying unit comprises:
a sequence number verifying module, configured to: verify the value of a Sequence Number field in CGA Params, and transmit the IPv6 packet to a source address verifying module after the verification succeeds;
the source address verifying module, configured to: verify a source address comprised in an IPv6 packet header according to parameters in the CGA Params, and transmit the IPv6 packet to a signature verifying module after the verification succeeds; and
the signature verifying module, configured to: use a public key in the CGA Params to decrypt a content of a Signature field in a CGA Sig, compare the obtained content with a hash value with some contents connected in series in the IPv6 packet, and if the contents are consistent, output a verification result indicating the verification succeeds.

11. The apparatus of claim 8 or 9, further comprising:
a requesting unit, configured to send an IPv6 packet carrying a CGA Request to the sender for requesting the sender to send CGA related information.

12. The apparatus of claim 11, wherein the requesting unit comprises:
an extension header generating module, configured to generate a CGA extension header, wherein the CGA extension header comprises a CGA Request;
an adding module, configured to add the CGA extension header to extension header of the IPv6 packet to generate an IPv6 packet carrying the CGA extension header; and
a sending module, configured to send the IPv6 packet carrying the CGA extension header to the sender, requesting the sender to add the CGA related information to the CGA extension header.

13. The apparatus of claim 11, wherein the requesting unit comprises:
a specifying module, configured to specify a Destination Options header in extension header of the IPv6 packet, wherein the specified Destination Options header comprises a CGA Request; and
a second sending module, configured to send the IPv6 packet carrying the Destination Options header to the sender, requesting the sender to add the CGA related information to the Destination Options header.

14. The apparatus of claim 8 or 9, further comprising:
a verification confirming unit, configured to: confirm according to related configuration information whether verification on a source address of the IPv6 packet is required and trigger the verifying unit to verify the source address of the IPv6 packet.

## Patentansprüche

1. Verfahren zum Verarbeiten von Paketen, **gekennzeichnet durch** Empfangen (S601) eines Internetprotokoll-Version-6-Pakets, IPv6-Pakets, das einen Erweiterungsnachrichtenkopf für kryptographisch erzeugte Adressen, CGA-Erweiterungsnachrichtenkopf, führt, von einem Sender, wobei der CGA-Erweiterungsnachrichtenkopf zu einem IPv6-Nachrichtenkopf des IPv6-Pakets hinzugefügt ist;
Erhalten des CGA-Erweiterungsnachrichtenkopfs aus dem IPv6-Paket (S602) in einer Netzschicht, wobei der CGA-Erweiterungsnachrichtenkopf CGA-Parameter, CGA-Params, und eine CGA-Signatur, CGA-Sig, umfasst;
Verifizieren einer Ursprungsadresse des IPv6-Pakets (S603) gemäß den CGA-Params und der CGA-Sig; und
Senden von Nutzdaten des IPv6-Pakets zu einer höheren Schicht (S604), nachdem die Verifikation erfolgreich war.

2. Verfahren nach Anspruch 1, das ferner Folgendes umfasst:
Verwerfen des IPv6-Pakets (S605), wenn die Verifikation fehlschlägt, und Senden eines Fehlerpakets zu dem Sender.

3. Verfahren nach Anspruch 1 oder 2, wobei der Schritt des Verifizierens der Ursprungsadresse des IPv6-Pakets gemäß den CGA-Params und der CGA-Sig Folgendes umfasst:
Verifizieren des Werts eines Folgenummernfeldes in den CGA-Params;
Verifizieren der Ursprungsadresse, die ein IPv6-Paketnachrichtenkopf umfasst, gemäß Parametern in den CGA-Params, wenn die Verifikation erfolgreich ist; und
Verwenden eines öffentlichen Schlüssels in den CGA-Params, um einen Inhalt eines Signatur-Feldes in den CGA-Sig zu entschlüsseln, nachdem die Verifikation erfolgreich war, Vergleichen des erhaltenen Inhalts mit einem Hash-Wert mit einigen Inhalten, die in dem IPv6-Paket in Reihe verbunden sind, und wenn die Inhalte konsistent sind, Ausgeben eines Verifikationsergebnisses, das angibt, dass die Verifikation erfolgreich ist.

4. Verfahren nach Anspruch 1 oder 2, wobei das Verfahren vor dem Schritt des Empfangens des IPv6-Pakets, das den CGA-Erweiterungsnachrichtenkopf führt, von dem Sender ferner Folgendes umfasst:
Senden eines IPv6-Pakets, das eine CGA-Anforderung führt, zu dem Sender, um anzufordern, dass der Sender Informationen, die sich auf die CGA beziehen, sendet.

5. Verfahren nach Anspruch 4, wobei der Schritt des Sendens des IPv6-Pakets, das die CGA-Anforderung führt, zu dem Sender, um anzufordern, dass der Sender die Informationen, die sich auf die CGA beziehen, sendet, Folgendes umfasst:
Erzeugen eines CGA-Erweiterungsnachrichtenkopfs, der eine CGA-Anforderung umfasst;
Hinzufügen des CGA-Erweiterungsnachrichtenkopfs zu dem Erweiterungsnachrichtenkopf des IPv6-Pakets, um ein IPv6-Paket zu erzeugen, das den CGA-Erweiterungsnachrichtenkopf führt; und
Senden des IPv6-Pakets, das den CGA-Erweiterungsnachrichtenkopf führt, zu dem Sender, um anzufordern, dass der Sender die Informationen, die sich auf die CGA beziehen, zu dem CGA-Erweiterungsnachrichtenkopf hinzufügt.

6. Verfahren nach Anspruch 4, wobei der Schritt des Sendens des IPv6-Pakets, das die CGA-Anforderung führt, zu dem Sender, um anzufordern, dass der Sender die Informationen, die sich auf die CGA beziehen, sendet, Folgendes umfasst:
Spezifizieren eines Zieloptionennachrichtenkopfs in dem Erweiterungsnachrichtenkopf des IPv6-Pakets, wobei der spezifizierte Zieloptionennachrichtenkopf eine CGA-Anforderung umfasst, und
Senden des IPv6-Pakets, das den Zieloptionennachrichtenkopf führt, zu dem Sender, um anzufordern, dass der Sender die Informationen, die sich auf die CGA beziehen, zu dem Zieloptionennachrichtenkopf hinzufügt.

7. Verfahren nach Anspruch 1, wobei das Verfahren vor dem Schritt des Verifizierens der Ursprungsadresse des IPv6-Pakets gemäß den CGA-Params und der CGA-Sig Folgendes umfasst:
Bestätigen durch die Netzschicht, ob die Verifikation der Ursprungsadresse des IPv6-Pakets erforderlich ist, gemäß den sich darauf beziehenden Konfigurationsinformationen.

8. Vorrichtung zum Verarbeiten von Paketen, **gekennzeichnet durch** eine Empfangseinheit (11), die konfiguriert ist, ein Internetprotokoll-Version-6-Paket, IPv6-Paket, das einen Erweiterungsnachrichtenkopf für kryptographisch erzeugte Adressen, CGA-Erweiterungsnachrichtenkopf, führt, von einem Sender zu empfangen, wobei der CGA-Erweiterungsnachrichtenkopf zu einem IPv6-Nachrichtenkopf des IPv6-Pakets hinzugefügt ist;
eine Erhalteeinheit (12), die konfiguriert ist, den CGA-Erweiterungsnachrichtenkopf aus dem IPv6-Paket in einer Netzschicht zu erhalten, wobei der CGA-Erweiterungsnachrichtenkopf CGA-Parameter, CGA-Params, und CGA-Signatur, CGA-Sig, des Senders umfasst;
eine Verifizierungseinheit (13), die konfiguriert ist, eine Ursprungsadresse des IPv6-Pakets gemäß den CGA-Params und der CGA-Sig zu verifizieren; und
eine Sendeeinheit (14), die konfiguriert ist, Nutzdaten des IPv6-Pakets zu einer höheren Schicht zu senden, nachdem die Verifikation erfolgreich war.

9. Vorrichtung nach Anspruch 8, die ferner Folgendes umfasst:
eine Fehlerverarbeitungseinheit (15), die konfiguriert ist, das IPv6-Paket zu verwerfen, wenn die Verifikation fehlschlägt, und ein Fehlerpaket zu dem Sender zu senden.

10. Vorrichtung nach Anspruch 8 oder 9, wobei die Verifizierungseinheit Folgendes umfasst:
ein Folgenummerverifizierungsmodul, das konfiguriert ist: den Wert eines Folgenummernfeldes in CGA-Params zu verifizieren und das IPv6-Paket zu einem Ursprungsadressenverifizierungsmodul zu senden, nachdem die Verifikation erfolgreich war;
das Ursprungsadressenverifizierungsmodul konfiguriert ist: eine von einem IPv6-Paket-Nachrichtenkopf umfasste Ursprungsadresse gemäß Parametern in den CGA-Params zu verifizieren und das IPv6-Paket zu einem Signaturverifizierungsmodul zu senden, nachdem die Verifikation erfolgreich war; und
das Signaturverifizierungsmodul konfiguriert ist: einen öffentlichen Schlüssel in den CGA-Params zu verwenden, um einen Inhalt eines Signaturfeldes in einer CGA-Sig zu entschlüsseln, den erhaltenen Inhalt mit einem Hash-Wert mit einigen Inhalten, die in Reihe in dem IPv6-Paket verbunden sind, zu vergleichen, und wenn die Inhalte konsistent sind, ein Verifikationsergebnis auszugeben, das angibt, dass die Verifikation erfolgreich war.

11. Vorrichtung nach Anspruch 8 oder 9, die ferner Folgendes umfasst:
eine Anforderungseinheit, die konfiguriert ist, ein IPv6-Paket, das eine CGA-Anforderung führt, zu dem Sender zu senden, um anzufordern, dass der Sender Informationen, die sich auf die CGA beziehen, sendet.

12. Vorrichtung nach Anspruch 11, wobei die Anforderungseinheit Folgendes umfasst:
ein Erweiterungsnachrichtenkopf-Erzeugungsmodul, das konfiguriert ist, einen CGA-Erweiterungsnachrichtenkopf zu erzeugen, wobei der CGA-Erweiterungsnachrichtenkopf eine CGA-Anforderung umfasst;
ein Hinzufügungsmodul, das konfiguriert ist, den CGA-Erweiterungsnachrichtenkopf zu dem Erweiterungsnachrichtenkopf des IPv6-Pakets hinzuzufügen, um ein IPv6-Paket zu erzeugen, das den CGA-Erweiterungsnachrichtenkopf führt; und
ein Sendemodul, das konfiguriert ist, das IPv6-Paket, das den CGA-Erweiterungsnachrichtenkopf führt, zu dem Sender zu senden, um anzufordern, dass der Sender die Informationen, die sich auf die CGA beziehen, zu dem CGA-Erweiterungsnachrichtenkopf hinzufügt.

13. Vorrichtung nach Anspruch 11, wobei die Anforderungseinheit Folgendes umfasst:
ein Spezifizierungsmodul, das konfiguriert ist, einen Zieloptionennachrichtenkopf in dem Erweiterungsnachrichtenkopf des IPv6-Pakets zu spezifizieren, wobei der spezifizierte Zieloptionennachrichtenkopf eine CGA-Anforderung umfasst, und
ein zweites Sendemodul, das konfiguriert ist, das IPv6-Paket, das den Zieloptionennachrichtenkopf führt, zu dem Sender zu senden, um anzufordern, dass der Sender die Informationen, die sich auf die CGA beziehen, zu dem Zieloptionennachrichtenkopf hinzufügt.

14. Vorrichtung nach Anspruch 8 oder 9, die ferner Folgendes umfasst:
eine Verifikationsbestätigungseinheit, die konfiguriert ist: gemäß damit in Beziehung stehenden Konfigurationsinformationen zu bestätigen, ob die Verifikation auf einer Ursprungsadresse des IPv6-Paket erforderlich ist, und auszulösen, dass die Verifizierungseinheit die Ursprungsadresse des IPv6-Pakets verifiziert.

## Revendications

1. Procédé de traitement de paquets **caractérisé par** les étapes suivantes :
recevoir (S601) un paquet de protocole Internet version 6, IPv6, acheminant un en-tête d'extension d'adresses générées cryptographiquement, CGA, depuis un expéditeur, où l'en-tête d'extension CGA est ajouté à un en-tête IPv6 du paquet IPv6 ;
au niveau d'une couche réseau, obtenir l'en-tête d'extension CGA à partir du paquet IPv6 (S602), où l'en-tête d'extension CGA comprend des paramètres CGA, CGA Params, et une signature CGA, CGA Sig ;
vérifier une adresse source du paquet IPv6 (S603) conformément aux paramètres CGA et à la signature CGA ; et
transmettre des données utiles du paquet IPv6 à une couche supérieure (S604) après réussite de la vérification.

2. Procédé selon la revendication 1, comprenant en outre les étapes suivantes :
se débarrasser du paquet IPv6 (S605) lorsque la vérification échoue et envoyer un paquet d'erreur à l'expéditeur.

3. Procédé selon la revendication 1 ou la revendication 2, dans lequel l'étape comprenant de vérifier l'adresse source du paquet IPv6 conformément aux paramètres CGA et à la signature CGA comprend les étapes suivantes :
vérifier la valeur d'un champ de numéro de séquence dans les paramètres CGA ;
vérifier l'adresse source comprise dans un en-tête de paquet IPv6 conformément à des paramètres dans les paramètres CGA si la vérification réussit ; et
utiliser une clé publique dans les paramètres CGA pour décrypter un contenu d'un champ de signature dans une signature CGA après que la vérification a réussi,
comparer le contenu obtenu avec une valeur de hachage avec certains contenus connectés en série dans le paquet IPv6 et, si les contenus sont cohérents, délivrer en sortie un résultat de vérification indiquant que la vérification a réussi.

4. Procédé selon la revendication 1 ou la revendication 2, dans lequel, avant l'étape comprenant de recevoir le paquet IPv6 acheminant l'en-tête d'extension CGA depuis l'expéditeur, le procédé comprend en outre l'étape suivante :
envoyer un paquet IPv6 acheminant une requête CGA à l'expéditeur pour demander à l'expéditeur d'envoyer des informations liées à la CGA.

5. Procédé selon la revendication 4, dans lequel le procédé comprenant d'envoyer le paquet IPv6 acheminant la requête CGA à l'expéditeur pour demander à l'expéditeur d'envoyer des informations liées à la CGA comprend les étapes suivantes :
générer un en-tête d'extension CGA qui comprend une requête CGA ;
ajouter l'en-tête d'extension CGA à l'en-tête d'extension du paquet IPv6 pour générer un paquet IPv6 acheminant l'en-tête d'extension CGA ; et
envoyer le paquet IPv6 acheminant l'en-tête d'extension CGA à l'expéditeur pour demander à l'expéditeur d'ajouter les informations liées à la CGA à l'en-tête d'extension CGA.

6. Procédé selon la revendication 4, dans lequel l'étape comprenant d'envoyer le paquet IPv6 acheminant la requête CGA à l'expéditeur pour demander à l'expéditeur d'envoyer les informations liées à la CGA comprend les étapes suivantes :
spécifier un en-tête d'options de destination dans un en-tête d'extension du paquet IPv6, où l'en-tête d'options de destination spécifié comprend une demande CGA, et
envoyer le paquet IPv6 acheminant l'en-tête d'options de destination à l'expéditeur pour demander à l'expéditeur d'ajouter les informations liées à la CGA à l'en-tête d'options de destination.

7. Procédé selon la revendication 1, dans lequel, avant l'étape comprenant de vérifier l'adresse source du paquet IPv6 conformément aux paramètres CGA et à la signature CGA, le procédé comprend l'étape suivante :
confirmer, par la couche réseau, si la vérification de l'adresse source du paquet IPv6 est requise conformément aux informations de configuration liées.

8. Appareil de traitement de paquets, **caractérisé par** :
une unité de réception (11), configurée pour recevoir un paquet de protocole Internet version 6, IPv6, acheminant un en-tête d'extension d'adresses générées cryptographiquement, CGA, depuis un expéditeur, l'en-tête d'extension CGA étant ajouté à un en-tête IPv6 du paquet IPv6 ;
une unité d'obtention (12), configurée pour obtenir l'en-tête d'extension CGA à partir du paquet IPv6, au niveau d'une couche réseau, où l'en-tête d'extension CGA comprend des paramètres CGA, CGA Params, et une signature CGA, CGA Sig, de l'expéditeur ;
une unité de vérification (13), configurée pour vérifier une adresse source du paquet IPv6 conformément aux paramètres CGA et à la signature CGA ; et
une unité de transmission (14), configurée pour transmettre des données utiles du paquet IPv6 à une couche supérieure après réussite de la vérification.

9. Appareil selon la revendication 8, comprenant en outre :
une unité de traitement d'erreur (15), configurée pour se débarrasser du paquet IPv6 lorsque la vérification échoue et envoyer un paquet d'erreur à l'expéditeur.

10. Appareil selon la revendication 8 ou la revendication 9, dans lequel l'unité de vérification comprend :
un module de vérification de numéro de séquence, configuré pour vérifier la valeur d'un champ de numéro de séquence dans des paramètres CGA, et transmettre le paquet IPv6 à un module de vérification d'adresse source après réussite de la vérification ;
le module de vérification d'adresse source, configuré pour vérifier une adresse source comprise dans un en-tête de paquet IPv6 conformément à des paramètres dans les paramètres CGA et transmettre le paquet IPv6 à un module de vérification de signature après réussite de la vérification ; et
le module de vérification de signature, configuré pour utiliser une clé publique dans les paramètres CGA pour décrypter un contenu d'un champ de signature dans une signature CGA, pour comparer le contenu obtenu avec une valeur de hachage avec certains contenus connectés en série dans le paquet IPv6 et, si les contenus sont cohérents, délivrer en sortie un résultat de vérification indiquant que la vérification a réussi.

11. Appareil selon la revendication 8 ou la revendication 9, comprenant en outre :
une unité de demande, configurée pour envoyer un paquet IPv6 acheminant une requête CGA à l'expéditeur pour demander à l'expéditeur d'envoyer des informations liées à la CGA.

12. Appareil selon la revendication 11, dans lequel l'unité de demande comprend :
un module de génération d'en-tête d'extension, configuré pour générer un en-tête d'extension CGA, où l'en-tête d'extension CGA comprend une requête CGA ;
un module d'ajout, configuré pour ajouter l'en-tête d'extension CGA à l'en-tête d'extension du paquet IPv6 pour générer un paquet IPv6 acheminant l'en-tête d'extension CGA ; et
un module d'envoi, configuré pour envoyer le paquet IPv6 acheminant l'en-tête d'extension CGA à l'expéditeur, demandant à l'expéditeur d'ajouter les informations liées à la CGA à l'en-tête d'extension CGA.

13. Appareil selon la revendication 11, dans lequel l'unité de demande comprend :
un module de spécification, configuré pour spécifier un en-tête d'options de destination dans un en-tête d'extension du paquet IPv6, où l'en-tête d'options de destination spécifié comprend une demande CGA ; et
un second module d'envoi, configuré pour envoyer le paquet IPv6 acheminant l'en-tête d'options de destination à l'expéditeur, pour demander à l'expéditeur d'ajouter les informations liées à la CGA à l'en-tête d'options de destination.

14. Appareil selon la revendication 8 ou la revendication 9, comprenant en outre :
une unité de confirmation de vérification, configurée pour confirmer, selon des informations de configuration liées, si une vérification sur une adresse source du paquet IPv6 est requise et déclencher l'unité de vérification pour vérifier l'adresse source du paquet IPv6.
